(19)

**Europäisches Patentamt**
**European Patent Office**
**Office européen des brevets**

(11) **EP 4 757 116 A1**

(12) **EUROPEAN PATENT APPLICATION**

(43) Date of publication:
**10.06.2026  Bulletin 2026/24**

(21) Application number: **25220751.9**

(22) Date of filing: **04.12.2025**

(51) International Patent Classification (IPC):
**H02J 7/54** *(2026.01)*          **H02J 7/34** *(2006.01)*
**H02J 7/96** *(2026.01)*

(52) Cooperative Patent Classification (CPC):
**H02J 7/54; H02J 7/345; H02J 7/96;** H02J 2207/20;
H02J 2207/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024  KR 20240180071**

(71) Applicant: **Korchip Corporation
Anyang-si, Gyeonggi-do 13966 (KR)**

(72) Inventors:
• **CHOI, Soon Joo
  Anyang-si 14035 (KR)**
• **SON, Jin Hyoung
  Anyang-si 14035 (KR)**
• **LIM, Byong Il
  Anyang-si 14035 (KR)**
• **LEE, Se Hee
  Anyang-si 14035 (KR)**

(74) Representative: **Icosa Europe
Rue d'Oultremont 37
1040 Bruxelles (BE)**

(54) **BALANCER FOR ELECTRIC DOUBLE-LAYER CAPACITOR CELLS**

(57)      Disclosed is a balancer (100) for electric double-layer capacitors (C1, C2) that improves charging energy efficiency by allowing deviation within a permissible range in which charging voltages of a first electric double-layer capacitor (C1) and a second electric double-layer capacitor (C2) do not cause problems, while controlling currents (IL1, IL2) flowing through the two electric double-layer capacitors to be equal. The balancer (100) includes a first resistor (R1), a second resistor (R2), and a third resistor (R3) sequentially connected in series between a power line (VCC) and a common line (COMMON); a first transistor (Q1) having a base terminal (B) electrically connected between the first resistor (R1) and the second resistor (R2) and connected across the first electric double-layer capacitor (C1); and a second transistor (Q2) connected in series with the first transistor (Q1), having a base terminal (B) electrically connected between the second resistor (R2) and the third resistor (R3) and connected across the second electric double-layer capacitor (C2).

Fig. 3

## Description

## Technical Field

Embodiments of the present disclosure relate to a balancer of electric double-layer capacitors.

## Description of the Related Art

Electric double-layer capacitors (EDLCs) have the advantage of high capacitance due to their structural characteristics, but have the disadvantage of a low rated voltage. Therefore, when the voltage required in practical applications is significantly higher than the rated voltage of an EDLC, a module of electric double-layer capacitors is configured by connecting multiple EDLC cells in series.

The multiple electric double-layer capacitor cells constituting an electric double-layer capacitor module exhibit differences in their charging voltages due to dispersion in capacitance or leakage current. In addition, when the electric double-layer capacitor module is charged to its maximum voltage, some electric double-layer capacitor cells having a smaller capacitance can exceed their rated voltage and can be damaged.

To address problems arising from cell characteristic unbalance in an electric double-layer capacitor module formed by connecting multiple electric double-layer capacitor cells in series, a passive balancer or an active balancer can be applied.

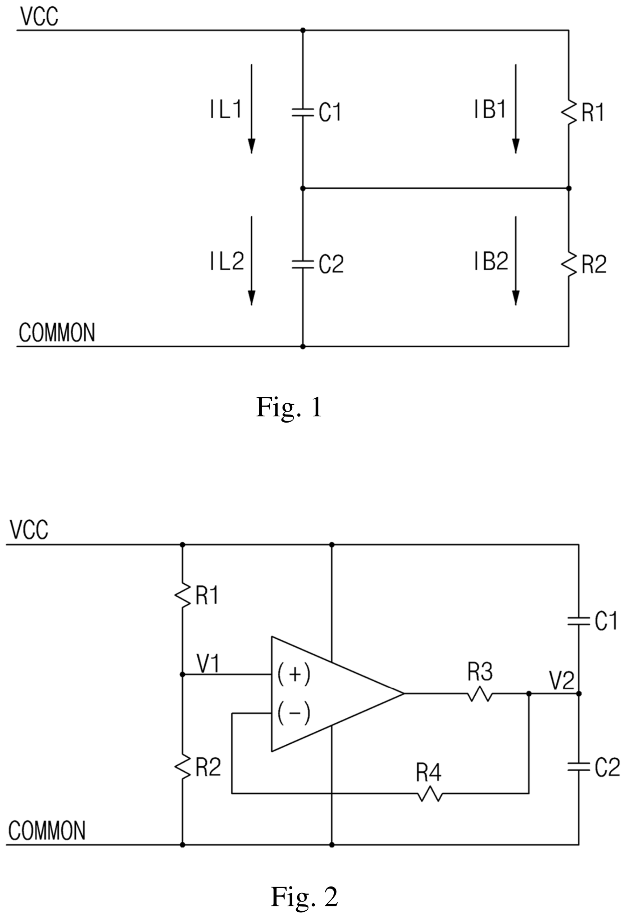

A known passive balancer, as shown in FIG. 1, adds shunt resistors (R1, R2) in parallel with the electric double-layer capacitors (C1, C2) and allows shunt currents (IB1, IB2), which are much larger than the leakage currents (IL1, IL2), to flow through the shunt resistors, thereby preventing charging voltage imbalance caused by the leakage currents. However, this causes power loss due to the shunt currents, resulting in reduced charging energy efficiency.

Another known active balancer, as shown in FIG. 2, uses an operational amplifier (OP-AMP) to control the charging voltage so that it is always maintained at half of the supply voltage. Although the active balancer has the advantage of keeping the charging voltages of the electric double-layer capacitors (C1, C2) constantly equal, it operates sensitively even to minute charging voltage unbalance, causing repeated charging and discharging, which leads to reduced charging energy efficiency.

## SUMMARY

It is an object of the invention to address at least some of the problems of the known balancers of double-layer capacitors.

The invention is defined by the independent claims. The dependent claims define advantageous embodiments.

The present invention provides a balancer for electric double-layer capacitors that improves charging energy efficiency by controlling the currents flowing through the two electric double-layer capacitor circuits (IC1 and IC2, flowing through Q1 and Q2) to be equal, while allowing deviation within a range in which the charging voltages of the two electric double-layer capacitors are not problematic.

Furthermore, the present invention provides a balancer for electric double-layer capacitors that can automatically compensate for the rated voltage of the electric double-layer capacitor that has changed due to ambient temperature variations by adjusting the operating points of the two transistors according to ambient temperature changes, thereby enhancing safety.

Furthermore, the present invention provides a balancer for electric double-layer capacitors that can perform balancing according to differences in capacitance and differences in leakage current between the two electric double-layer capacitors, while simultaneously improving energy efficiency.

A balancer for electric double-layer capacitors according to an embodiment of the present disclosure includes a first electric double-layer capacitor and a second electric double-layer capacitor connected in series sequentially between a power line and a common line, a first resistor, a second resistor, and a third resistor sequentially connected in series between the power line and the common line, a first transistor having a base electrically connected between the first resistor and the second resistor and connected in parallel with the first electric double-layer capacitor, and a second transistor connected in series with the first transistor, having a base electrically connected between the second resistor and the third resistor, and connected in parallel with the second electric double-layer capacitor, wherein the balancer is configured to balance the current flowing through the first and second electric double-layer capacitors such that the currents become identical while allowing deviation within a range in which charging voltages are not problematic.

The first resistor can have a first terminal electrically connected to the power line, to a collector of the first transistor, and to a first terminal of the first electric double-layer capacitor, and a second terminal electrically connected to a first terminal of the second resistor and the base of the first transistor.

The second resistor can have a first terminal electrically connected to the second terminal of the first resistor and to the base of the first transistor, and a second terminal electrically connected to a first terminal of the third resistor and a base of the second transistor.

The third resistor can have a first terminal electrically connected to the second terminal of the second resistor and to the base of the second transistor, and a second terminal electrically connected to the common line, to a collector of the second transistor, and to a second terminal of the second electric double-layer capacitor.

The first transistor can for example be an NPN-type transistor, and the second transistor can for example be a PNP-type transistor.

The second transistor can have a base electrically connected to the second terminal of the second resistor and to the first terminal of the third resistor, a collector electrically connected to the common line, to the second terminal of the third resistor, and to the second terminal of the second electric double-layer capacitor, and an emitter electrically connected to the emitter of the first transistor, to the second terminal of the first electric double-layer capacitor, and to the first terminal of the second electric double-layer capacitor.

In some examples, the resistance value of the second resistor is smaller than the resistance value of the first resistor and smaller than the resistance value of the third resistor. In such a case, the first transistor current and the second transistor current decrease, thereby reducing energy loss.

In some examples, the resistance value of the second resistor is greater than the resistance value of the first resistor and greater than the resistance value of the third resistor. In such a case, the first transistor current and the second transistor current increase, thereby reducing the charging voltage deviation between the first and second electric double-layer capacitors.

The second transistor can be activated when a first leakage current, which is a leakage current of the first electric double-layer capacitor, is greater than a second leakage current, which is a leakage current of the second electric double-layer capacitor.

The first transistor can be activated when a second leakage current, which is a leakage current of the second electric double-layer capacitor, is greater than a first leakage current, which is a leakage current of the first electric double-layer capacitor.

When a capacitance of the first electric double-layer capacitor is smaller than a capacitance of the second electric double-layer capacitor, , the first electric double-layer capacitor is discharged and the second electric double-layer capacitor is charged by an amount corresponding to a difference between a first transistor current, which is a collector current of the first transistor, and a second transistor current, which is a collector current of the second transistor, thereby enabling a second voltage, which is a voltage between the first electric double-layer capacitor and the second electric double-layer capacitor, to be half of a power supply voltage supplied through the power line and the common line.

When a capacitance of the second electric double-layer capacitor is smaller than a capacitance of the first electric double-layer capacitor, the first electric double-layer capacitor is charged and the second electric double-layer capacitor is discharged by an amount corresponding to a difference between a first transistor current, which is a collector current of the first transistor, and a second transistor current, which is a collector current of the second transistor, thereby enabling a second voltage, which is a voltage between the first electric double-layer capacitor and the second electric double-layer capacitor, to be half of a power supply voltage supplied through the power line and the common line.

The balancer for electric double-layer capacitors according to an embodiment of the present invention can improve charging energy efficiency by controlling the currents flowing through the two electric double-layer capacitor circuits to be equal, while allowing deviation within a range in which the charging voltages of the two electric double-layer capacitors are not problematic.

Furthermore, the balancer for electric double-layer capacitors according to an embodiment of the present invention can automatically compensate for the rated voltage of the electric double-layer capacitors that has changed due to ambient temperature variations by adjusting the operating points of the two transistors according to such temperature changes, thereby enhancing safety.

Moreover, the balancer for electric double-layer capacitors according to an embodiment of the present invention can perform balancing according to differences in capacitance and differences in leakage current between the two-electric double-layer capacitors, while simultaneously improving energy efficiency.

However, the technical effects to be achieved in the embodiment of the disclosure are not limited to the technical problems mentioned above, and other technical effects not mentioned herein will be clearly understood from the following description by those skilled in the art to which the disclosure belongs.

**Brief Description of the Drawings**

The following drawings attached to the present specification illustrate embodiments of the present disclosure, and further describe aspects and features of the present disclosure together with the detailed description of the present disclosure. Thus, the present disclosure should not be construed as being limited to the drawings:

FIG.1 is an example of a circuit diagram illustrating a passive balancer for an electric double-layer capacitor.

FIG. 2 is an example of a circuit diagram illustrating an active balancer for an electric double-layer capacitor.

FIG. 3 is a circuit diagram illustrating a balancer for an electric double-layer capacitor according to the present invention.

**DETAILED DESCRIPTION OF EXEMPLARY EMBODIMENTS**

Hereinafter, preferred embodiments of the present disclosure will be described in detail with reference to the accompanying drawings.

However, the embodiments of the present disclosure can be embodied in various different forms and should not be construed as limited to the embodiments set forth herein. Rather, these embodiments are provided so that those skilled in the art can fully understand the scope and spirit of the present disclosure in a thorough and complete manner.

In the drawings, the thicknesses or sizes of layers are exaggerated for convenience and clarity of explanation, and identical reference numerals denote identical elements. As used herein, the term "and/or" includes any and all combinations of one or more of the associated listed items. As further used herein, when a member A is referred to as being connected to a member B, the member A can be directly connected to the member B or indirectly connected to the member B with another member interposed therebetween.

The terms used in this specification are merely for the purpose of describing particular embodiments and are not intended to limit the present disclosure. In the singular form used herein, the singular can include the plural unless the context clearly indicates otherwise. In addition, the expressions "comprise" or "comprising" used herein specify the presence of stated shapes, numbers, steps, operations, members, elements, and/or groups thereof, but do not exclude the presence or addition of one or more other different shapes, numbers, steps, operations, members, elements, and/or groups thereof.

As used herein, the terms "first," "second," and the like are used merely to distinguish one element, component, region, layer, or portion from another. These terms do not denote any order, hierarchy, or priority. Thus, a "first" element can be referred to as a "second" element without departing from the spirit of the present disclosure.

Spatially relative terms, such as "below," "beneath," "lower," "above," "upper," and the like, are used for ease of description to describe the relationship of one element or feature to another element or feature as illustrated in the figures. These terms are intended to facilitate understanding of the present disclosure under various processing or usage states and are not intended to limit the present disclosure. For example, if an element shown in the drawings is inverted, an element described as "below" or "beneath" can instead be "above" or "upper." Thus, the term "below" is intended to encompass both "above" and "below," depending on orientation.

Preferred embodiments of the present disclosure will now be described in detail with reference to the accompanying drawings so that a person skilled in the art can readily practice the invention.

Throughout the specification, identical reference numerals are assigned to parts having similar configurations and operations. Further, when a part is described as being electrically coupled to another part, this includes not only the case in which they are directly connected, but also the case in which they are indirectly connected with another element interposed therebetween.

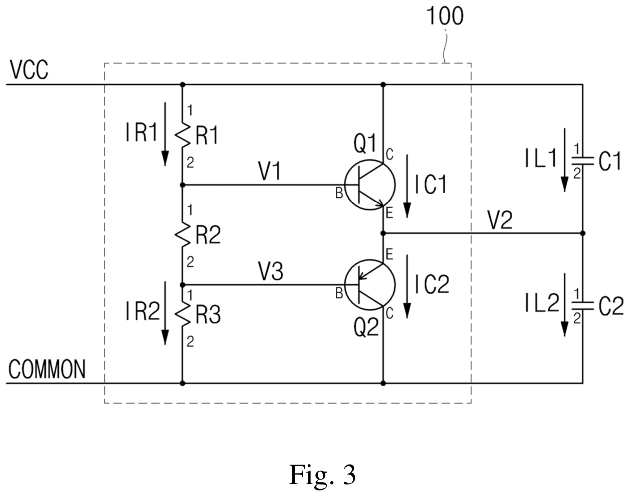

FIG. 3 shows a circuit diagram illustrating an exemplary balancer of electric double-layer capacitors according to the present invention. As shown in FIG. 3, the balancer (100) for the electric double-layer capacitors can include a first transistor (Q1), a second transistor (Q2), a first resistor (R1), a second resistor (R2), and a third resistor (R3). Furthermore, the balancer (100) for the electric double-layer capacitor is electrically connected to a power supply line (VCC) and a common line (COMMON), enabling it to receive a power supply voltage. This balancer (100) for the electric double-layer capacitors allows deviation within a range in which the charging voltages of the first electric double-layer capacitor (C1) and the second electric double-layer capacitor (C2), which are connected in series, are not problematic, while balancing the currents flowing through the first and second electric double-layer capacitor circuits (C1, C2) to be identical.

Here, the first resistor (R1), the second resistor (R2), and the third resistor (R3) are connected in series with each other, and the power supply voltage is distributed according to the resistance values of the resistors.

Below, the connection relationships for each component included in the electric double-layer capacitor balancer (100) will be described.

The power supply line (VCC) can be electrically connected to the first terminal (1) of the first resistor (R1), the collector (C) of the first transistor (Q1), and the first terminal (1) of the first electric double-layer capacitor (C1). Furthermore, the common line (COMMON) can be electrically connected to the second terminal (2) of the third resistor (R3), the collector (C) of the second transistor (Q2), and the second terminal (2) of the second electric double-layer capacitor (C2).

The first resistor (R1) can include a first terminal (1) and a second terminal (2). The first terminal (1) of the first resistor (R1) can be electrically connected to the power supply line (VCC), the collector (C) of the first transistor (Q1), and the first terminal (1) of the first electric double-layer capacitor (C1). The second terminal (2) of the first resistor (R1) can be electrically connected to the first terminal (1) of the second resistor (R2) and to the base (B) of the first transistor (Q1).

The second resistor (R2) can include a first terminal (1) and a second terminal (2). The first terminal (1) of the second resistor (R2) can be electrically connected to the second terminal (2) of the first resistor (R1) and to the base (B) of the first transistor (Q1). The second terminal (2) of the second resistor (R2) can be electrically connected to the first terminal (1) of the third resistor (R3) and to the base (B) of the second transistor (Q2).

The third resistor (R3) can include a first terminal (1) and a second terminal (2). The first terminal (1) of the third resistor (R3) can be electrically connected to the second terminal (2) of the second resistor (R2) and to the base (B) of the second transistor (Q2). The second terminal (2) of the third resistor (R3) can be electrically connected to the common line (COMMON), to the collector (C) of the second transistor (Q2), and to the second terminal (2) of the second electric double-layer capacitor (C2).

In some examples, the first transistor (Q1) is an NPN transistor including a base (B), a collector (C), and an emitter (E). The base (B) of the first transistor (Q1) can be electrically connected to the second terminal (2) of the first resistor (R1) and to the first terminal (1) of the second resistor (R2). The collector (C) of the first transistor (Q1) can be electrically connected to the power supply line (VCC), to the first terminal (1) of the first resistor (R1), and to the first terminal (1) of the first electric double-layer capacitor (C1). The emitter (E) of the first transistor (Q1) can be electrically connected to the emitter (E) of the second transistor (Q2), to the second terminal (2) of the first electric double-layer capacitor (C1), and to the first terminal (1) of the second electric double-layer capacitor (C2).

In some examples, the second transistor (Q2) is a PNP transistor including a base (B), a collector (C), and an emitter (E). The base (B) of the second transistor (Q2) can be electrically connected to the second terminal (2) of the second resistor (R2) and to the first terminal (1) of the third resistor (R3). The collector (C) of the second transistor (Q2) can be electrically connected to the common line (COMMON), to the second terminal (2) of the third resistor (R3), and to the second terminal (2) of the second electric double-layer capacitor (C2). The emitter (E) of the second transistor (Q2) can be electrically connected to the emitter (E) of the first transistor (Q1), to the second terminal (2) of the first electric double-layer capacitor (C1), and to the first terminal (1) of the second electric double-layer capacitor (C2).

The first electric double-layer capacitor (C1) can include a first terminal (1) and a second terminal (2). The first terminal (1) of the first electric double-layer capacitor (C1) can be electrically connected to the power supply line (VCC), to the first terminal (1) of the first resistor (R1), and to the collector (C) of the first transistor (Q1). The second terminal (2) of the first electric double-layer capacitor (C1) can be electrically connected to the emitter (E) of the first transistor (Q1), to the emitter (E) of the second transistor (Q2), and to the first terminal (1) of the second electric double-layer capacitor (C2).

The second electric double-layer capacitor (C2) can include a first terminal (1) and a second terminal (2). The first terminal (1) of the second electric double-layer capacitor (C2) can be electrically connected to the emitter (E) of the first transistor (Q1), to the emitter (E) of the second transistor (Q2), and to the second terminal (2) of the first electric double-layer capacitor (C1). The second terminal (2) of the second electric double-layer capacitor (C2) can be electrically connected to the common line (COMMON), to the second terminal (2) of the third resistor (R3), and to the collector (C) of the second transistor (Q2).

This electric double-layer capacitor balancer (100) allows deviation within a range in which the charging voltages of the first electric double-layer capacitor (C1) and the second electric double-layer capacitor (C2) are not problematic, while controlling the currents flowing through the two electric double-layer capacitor circuits (C1, C2) to be identical, thereby improving charging energy efficiency.

In addition, the voltage (VBE) between the base (B) and emitter (E) of the semiconductor transistors (Q1, Q2) exhibits a negative temperature coefficient. Using this characteristic, it is possible to cope with the reduction in rated voltage withstand capability of the capacitors due to ambient temperature changes. In some examples, these transistors (Q1, Q2) are bipolar junction transistors (BJT). Furthermore, the relationship between the voltage (VBE) between the base (B) and emitter (E) and the collector current (IC) of the transistors (Q1, Q2) can be defined as in Equation 1 below.

[Equation 1]

$$IC = Is \times \exp\left[\frac{V_{BE}}{VT}\right]$$
$$VT = \frac{kt}{q}$$

Here, "Is" is the saturated current at the base (B) and emitter (E) junction of the transistors (Q1, Q2), and VBE is the forward voltage between the base (B) and emitter (E). In addition, k is the Boltzmann constant, t is the absolute temperature, and q is the elementary charge. Furthermore, VT is the thermal voltage, which equates to kt/q. When the absolute temperature (t) is 300K (27°C), the thermal voltage (VT) can be approximately 26 mV.

The collector current (IC) of such transistors (Q1, Q2) can increase tenfold for every approximately 60 mV increase in the forward voltage (VBE) between the base and emitter. In addition, for every 1°C increase in temperature, the forward voltage (VBE) between the base and emitter can decrease by approximately 2 mV. Because the operating points of the transistors (Q1, Q2) decrease by approximately 2 mV/°C when the ambient temperature rises, the balancer (100) for the electric double-layer capacitors can automatically compensate for the rated voltages of the electric double-layer capacitors (C1, C2) that vary due to ambient temperature changes, thereby improving safety.

Hereinafter, the voltage at the base (B) of the first transistor (Q1) can be referred to as the first voltage (V1), the voltage at the emitters (E) of the first transistor (Q1) and the second transistor (Q2) can be referred to as the second voltage (V2), and the voltage at the base (B) of the second transistor (Q2) can be referred to as the third voltage (V3).

Here, the operating point of the first transistor (Q1) or the second transistor (Q2) can be determined by the second voltage (V2), which is the voltage at the connection point between the first electric double-layer capacitor (C1) and the second electric double-layer capacitor (C2). That is, the connection point of the first electric double-layer capacitor (C1) and the second electric double-layer capacitor (C2) is directly connected to the connection point of the emitters (E) of the first transistor (Q1) and the second transistor (Q2), and by detecting the second voltage (V2), the first transistor (Q1) or the second transistor (Q2) can operate.

The balancer (100) of the electric double-layer capacitor can have the first resistor (R1) and the third resistor (R3) set to the same value. In this case, the difference between the power supply voltage (the voltage between the power supply line (VCC) and the common line (COMMON)) and the first voltage (V1) can be equal to the third voltage (V3). That is, when the first resistor (R1) and the third resistor (R3) are equal, the sum of the first voltage (V1) and the third voltage (V3), plus the second resistor voltage (VR2) (the voltage between the first terminal (1) and the second terminal (2) of the second resistor (R2)), can be equal to the magnitude of the power supply voltage. Here, the second resistor voltage (VR2) can be arbitrarily set.

The magnitudes of the first voltage (V1) and the third voltage (V3) can be set by adjusting the values of the first resistor (R1), the second resistor (R2), and the third resistor (R3). Here, the first resistor (R1) and the third resistor (R3) can have the same value. In addition, the value of the second resistor (R2) can be set according to the ratio between the rated voltages of the electric double-layer capacitors (C1, C2) and the power supply voltage.

For example, if the power supply voltage is low, providing sufficient margin between the rated voltages of the first electric double-layer capacitor (C1) and the second electric double-layer capacitor (C2), the value of the second resistor (R2) can be smaller than the value of the first resistor (R1) and smaller than the value of the third resistor (R3). This lowers the operating points of the first transistor (Q1) and the second transistor (Q2), thereby reducing the first transistor current (IC1), which is the collector current of the first transistor (Q1), and the second transistor current (IC2), which is the collector current of the second transistor (Q2), in the balanced state, so that energy loss can be minimized.

As another example, if the power supply voltage is high and there is no margin between the rated voltages of the first electric double-layer capacitor (C1) and the second electric double-layer capacitor (C2), the value of the second resistor (R2) can be greater than the value of the first resistor (R1) and greater than the value of the third resistor (R3). This raises the operating points of the first transistor (Q1) and the second transistor (Q2). In the balanced state, the transistor currents IC1 and IC2 can be increased, but the allowable deviation range of the charging voltages of the capacitors C1 and C2 can be reduced.

Furthermore, if the capacitances of the first electric double-layer capacitor (C1) and the second electric double-layer capacitor (C2) are identical, the leakage currents of the first electric double-layer capacitor (C1) and the second electric double-layer capacitor (C2) are identical, and the characteristics of the first transistor (Q1) and the second transistor (Q2) are also identical, then balancing can be unnecessary because the first transistor current (IC1) and the second transistor current (IC2) can be identical.

That is, if the characteristics of the first transistor (Q1) and the second transistor (Q2) are identical, and the first leakage current (IL1) of the first electric double-layer capacitor (C1) and the second leakage current (IL2) of the second electric double-layer capacitor (C2) are identical, the sum of the first transistor current (IC1) and the first leakage current (IL1) can be equal to the sum of the second transistor current (IC2) and the second leakage current (IL2). Furthermore, the second voltage (V2) can become half the power supply voltage, achieving balance.

Furthermore, if the first resistor (R1) and the third resistor (R3) are equal, and if the characteristics of the first transistor (Q1) and the second transistor (Q2) are identical, and if the first leakage current (IL1) and the second leakage current (IL2) are identical, and if the capacitances of the first electric double-layer capacitor (C1) and the second electric double-layer capacitor (C2) are equal, then the second voltage (V2) can become half the power supply voltage (VCC), achieving balance. In addition, because the first transistor current (IC1) and the second transistor current (IC2) can be equal, the current flowing from the first transistor (Q1) and the second transistor (Q2) to the first electric double-layer capacitor (C1) and the second electric double-layer capacitor (C2) can be zero.

Under these conditions, the electric double-layer capacitor balancer (100) can be designed such that the sum of the first resistor current (IR1) and the first transistor current (IC1) is smaller than the specification value of the first leakage current (IL1), and the sum of the third resistor current (IR2) and the second transistor current (IC2) is smaller than the specification value of the second leakage current (IL2), thereby minimizing energy loss.

The following describes the balancer (100) of the electric double-layer capacitors when there is a difference in the capacitance between the first electric double-layer capacitor (C1) and the second electric double-layer capacitor (C2).

When the capacitance of the first electric double-layer capacitor (C1) is greater than that of the second electric double-layer capacitor (C2), the charging voltage of the first electric double-layer capacitor (C1) becomes higher than that of the second electric double-layer capacitor (C2). As a result, the second voltage (V2) becomes higher than half the power supply voltage, making it necessary to additionally charge the first electric double-layer capacitor (C1) and to additionally discharge the second electric double-layer capacitor (C2) in order to balance the charging voltages caused by the capacitance difference between the two electric double-layer capacitors (C1, C2).

That is, if the capacitance of the first electric double-layer capacitor (C1) is greater than that of the second electric double-layer capacitor (C2), the second voltage (V2) increases. Consequently, the difference between the second voltage (V2) and the third voltage (V3) becomes larger than the difference between the first voltage (V1) and the second voltage (V2). This causes the second transistor current (IC2) to become larger than the first transistor current (IC1). The second electric double-layer capacitor (C2) discharges an additional amount equal to the difference between the second transistor current (IC2) and the first transistor current (IC1), and the first electric double-layer capacitor (C1) becomes additionally charged, raising the second voltage (V2) to potentially reach half the power supply voltage.

At this point, the relationship between the second transistor current (IC2) and the first transistor current (IC1) can be expressed by Equation 2.

[Equation 2]

$$IC2 = IC1 \times \exp\left[\frac{(V2 - V3) - (V1 - V2)}{VT}\right]$$

Here, the thermal voltage (VT) is a constant value identical to that in Equation 1. According to Equation 2, the charging voltage deviation caused by the capacitance difference between the first electric double-layer capacitor (C1) and the second electric double-layer capacitor (C2) decreases. Consequently, the second transistor current (IC2) also decreases, causing the second voltage (V2) to become half the power supply voltage, allowing the second transistor current (IC2) and the first transistor current (IC1) to become equal.

Another example is when the capacitance of the first electric double-layer capacitor (C1) is smaller than that of the second electric double-layer capacitor (C2). When the second voltage (V2) is lower than half the power supply voltage, the second electric double-layer capacitor (C2) must be charged and the first electric double-layer capacitor (C1) must be discharged to balance the voltage deviation caused by the capacitance difference between them.

That is, since the capacitance of the first electric double-layer capacitor (C1) is smaller than that of the second electric double-layer capacitor (C2), the second voltage (V2) becomes lower. Consequently, the difference between the first voltage (V1) and the second voltage (V2) becomes greater than the difference between the second voltage (V2) and the third voltage (V3). Therefore, the second transistor current (IC2) becomes smaller than the first transistor current (IC1). The first electric double-layer capacitor (C1) discharges an additional amount equal to the difference between the first transistor current (IC1) and the second transistor current (IC2), while the second electric double-layer capacitor (C2) additionally charges, causing the second voltage (V2) to rise and potentially reach half the power supply voltage.

At this time, the relationship between the first transistor current (IC1) and the second transistor current (IC2) can be expressed by Equation 3.

[Equation 3]

$$IC1 = IC2 \times \exp\left[\frac{(V1 - V2) - (V2 - V3)}{VT}\right]$$

Here, the thermal voltage (VT) is a constant value identical to that in Equation 1. According to Equation 3, the charging voltage deviation caused by the capacitance difference between the first electric double-layer capacitor (C1) and the second electric double-layer capacitor (C2) decreases. Consequently, the first transistor current (IC1) also decreases, causing the second voltage (V2) to become half the power supply voltage, allowing the first transistor current (IC1) and the second transistor current (IC2) to become equal.

This imbalance in charging voltage caused by the capacitance difference between the first electric double-layer capacitor (C1) and the second electric double-layer capacitor (C2) is characterized in that once it is initially balanced by the electric double-layer capacitor balancer (100), it does not pose a problem during subsequent repeated charging and discharging cycles.

Hereinafter, the electric double-layer capacitor balancer (100) is described for a case in which the capacitances of the first electric double-layer capacitor (C1) and the second electric double-layer capacitor (C2) are identical, but in which there is a deviation in their leakage currents. When the first leakage current (IL1) and the second leakage current (IL2) are equal, and the characteristics of the first transistor (Q1) and the second transistor (Q2) are identical, the first transistor current (IC1) and the second transistor current (IC2) are equal, and their value can be defined as the reference current (ICx).

If the second leakage current (IL2) is greater than the first leakage current (IL1), the second voltage (V2) becomes lower than half the power supply voltage. Here, the second voltage (V2) can continuously decrease over time. As the second voltage (V2) decreases due to the difference between the second leakage current (IL2) and the first leakage current (IL1), the difference between the first voltage (V1) and the second voltage (V2) increases, while the difference between the second voltage (V2) and the third voltage (V3) decreases. Consequently, the first transistor current (IC1) increases, and the second transistor current (IC2) decreases, allowing the sum of the first leakage current (IL1) flowing through the first electric double-layer capacitor (C1) and the first transistor current (IC1) to become equal to the sum of the second leakage current (IL2) flowing through the second electric double-layer capacitor (C2) and the second transistor current (IC2).

Here, the first transistor current (IC1) and the second transistor current (IC2) can be defined as in Equation 4.

[Equation 4]

$$IC1 = ICx \times \exp\left[\frac{(\frac{VS}{2}) - V2}{VT}\right]$$

$$IC2 = \frac{ICx}{\exp\left[\frac{(\frac{VS}{2}) - V2}{VT}\right]}$$

Of course, the thermal voltage (VT) here is the same constant value as in Equation 1. At this time, the imbalance value of the second voltage (V2) required for leakage current compensation can be as shown in Equation 5. By allowing this amount of voltage imbalance, the sum of the first transistor current (IC1) and the first leakage current (IL1) can become balanced with the sum of the second transistor current (IC2) and the second leakage current (IL2).

[Equation 5]

$$V2 = \left(\frac{VS}{2}\right) + \left\{VT \times \ln(\frac{IC1}{ICx})\right\}$$

Of course, the thermal voltage (VT) here is the same constant value as in Equation 1.

For example, if the first transistor current (IC1) is 100 times the reference current (ICx), the second voltage (V2) becomes (VS/2) - 120 mV, and the second transistor current (IC2) can become the reference current (ICx) divided by 100. That is, if the second leakage current (IL2) is larger than the first leakage current (IL1), an additional first transistor current (IC1) can flow through the first transistor (Q1), so that the sum of the first leakage current (IL1) and the first transistor current (IC1) becomes equal to the sum of the second leakage current (IL2) flowing through the second electric double-layer capacitor (C2) and the second transistor current (IC2).

If the first leakage current (IL1) is larger than the second leakage current (IL2), the second voltage (V2) becomes higher than half the power supply voltage, and the second voltage (V2) can continuously increase over time. As the second voltage (V2) increases due to the difference between the first leakage current (IL1) and the second leakage current (IL2), the difference between the first voltage (V1) and the second voltage (V2) decreases, while the difference between the second voltage (V2) and the third voltage (V3) increases. Consequently, the second transistor current (IC2) increases, and the first transistor current (IC1) decreases, allowing the sum of the first leakage current (IL1) flowing through the first electric double-layer capacitor (C1) and the first transistor current (IC1) to become equal to the sum of the second leakage current (IL2) flowing through the second electric double-layer capacitor (C2) and the second transistor current (IC2).

Here, the first transistor current (IC1) and the second transistor current (IC2) can be defined as in Equation 6.

[Equation 6]

$$IC2 = ICx \times \exp\left[\frac{V2 - (\frac{VS}{2})}{VT}\right]$$

$$IC1 = \frac{ICx}{\exp\left[\frac{V2 - (\frac{VS}{2})}{VT}\right]}$$

Of course, the thermal voltage (VT) here is the same constant value as in Equation 1. At this time, the imbalance value of the second voltage (V2) required for leakage current compensation can be as shown in Equation 7. By allowing this amount of voltage imbalance, the sum of the first transistor current (IC1) and the first leakage current (IL1) can become balanced with the sum of the second transistor current (IC2) and the second leakage current (IL2).

[Equation 7]

$$V2 = \left(\frac{VS}{2}\right) - \left\{VT \times \ln(\frac{IC2}{ICx})\right\}$$

Of course, the thermal voltage (VT) here is the same constant value as in Equation 1.

For example, if the second transistor current (IC2) is 100 times the reference current (ICx), the second voltage (V2) becomes approximately (VS/2) + 120 mV, and the first transistor current (IC1) can become the reference current (ICx) divided by 100. That is, if the first leakage current (IL1) is larger than the second leakage current (IL2), an additional second transistor current (IC2) can flow through the second transistor (Q2), so that the sum of this second transistor current (IC2) and the second leakage current (IL2) can become equal to the sum of the first leakage current (IL1), which is the leakage current of the first electric double-layer capacitor (C1), and the first transistor current (IC1).

The above description is merely one embodiment for implementing the electric double-layer capacitor balancer according to the present invention. The present invention is not limited to the aforementioned embodiment, and various modifications and implementations can be made by a person skilled in the art to which this invention pertains, without departing from the spirit of the invention, within the scope claimed in the following claims.

**Claims**

1. A balancer for electric double-layer capacitors comprising to balance currents flowing through a first electric double-layer capacitor and a second electric double-layer capacitor, sequentially connected in series between a power line and a common line, so that the currents become equal, the balancer comprising:

   a first resistor, a second resistor, and a third resistor sequentially connected in series between the power line and the common line;
   a first transistor having a base electrically connected between the first resistor and the second resistor, and connected in parallel with the first electric double-layer capacitor; and
   a second transistor connected in series with the first transistor, having a base electrically connected between the second resistor and the third resistor, and connected in parallel with the second electric double-layer capacitor.

2. The balancer for electric double-layer capacitors according to claim 1, wherein the first resistor has a first terminal electrically connected to the power line, to a collector of the first transistor, and to a first terminal of the first electric double-layer capacitor, and
   wherein the first resistor has a second terminal electrically connected to a first terminal of the second resistor and to the base of the first transistor.

3. The balancer for electric double-layer capacitors as claimed in claim 2, wherein the second resistor has a first terminal electrically connected to the second terminal of the first resistor and to the base of the first transistor, and
   wherein the second resistor has a second terminal electrically connected to a first terminal of the third resistor and to the base of the second transistor.

4. The balancer for electric double-layer capacitors as claimed in claim 3, wherein the third resistor has a first terminal electrically connected to the second terminal of the second resistor and to the base of the second transistor, and
   wherein the third resistor has a second terminal electrically connected to the common line, to a collector of the second transistor, and to a second terminal of the second electric double-layer capacitor.

5. The balancer for electric double-layer capacitors as claimed in any of preceding claims, wherein the first transistor is an NPN transistor and the second transistor is a PNP transistor.

6. The balancer for electric double-layer capacitors as claimed in claim 5, wherein the base of the first transistor is electrically connected to a second terminal of the first resistor and to a first terminal of the second resistor,

   wherein the first transistor has a collector electrically connected to the power line, to the first terminal of the first resistor, and to the first terminal of the first electric double-layer capacitor, and
   wherein the first transistor has an emitter electrically connected to an emitter of the second transistor, to a second terminal of the first electric double-layer capacitor, and to a first terminal of the second electric double-layer capacitor.

7. The balancer for electric double-layer capacitors as claimed in claim 5 or 6, wherein the base of the second transistor is electrically connected to a second terminal of the second resistor and to a first terminal of the third resistor,

   wherein the second transistor has a collector electrically connected to the common line, to a second terminal of the third resistor, and to a second terminal of the second electric double-layer capacitor, and
   wherein the second transistor has an emitter electrically connected to an emitter of the first transistor, to a second terminal of the first electric double-layer capacitor, and to a first terminal of the second electric double-layer capacitor.

8. The balancer for electric double-layer capacitors as claimed in any of preceding claims, wherein resistance values of the first resistor, of the second resistor, and of the third resistor are set based on a magnitude of a power supply voltage supplied through the power line and the common line and/or on a sum of rated voltages of the first and second electric double-layer capacitors.

9. The balancer for electric double-layer capacitors as claimed in any of preceding claims, wherein, the resistance value of the second resistor is smaller than the value of the first resistor and smaller than the value of the third resistor.

10. The balancer for electric double-layer capacitors as claimed in any of claims 1 to 8, wherein, the resistance value of the second resistor is greater than the value of the first resistor and is greater than the value of the third resistor.

**11.** The balancer for electric double-layer capacitors as claimed in any of preceding claims, wherein the second transistor is activated when a first leakage current, which is a leakage current of the first electric double-layer capacitor, is greater than a second leakage current, which is a leakage current of the second electric double-layer capacitor.

**12.** The balancer for electric double-layer capacitors as claimed in any of preceding claims,, wherein the first transistor is activated when a second leakage current, which is a leakage current of the second electric double-layer capacitor, is greater than a first leakage current, which is a leakage current of the first electric double-layer capacitor.

**13.** The balancer for electric double-layer capacitors as claimed in any of claims 1 to 12, wherein, when a capacitance of the first electric double-layer capacitor is smaller than a capacitance of the second electric double-layer capacitor, the first electric double-layer capacitor is discharged and the second electric double-layer capacitor is charged by an amount corresponding to a difference between a first transistor current, which is a collector current of the first transistor, and a second transistor current, which is a collector current of the second transistor, thereby enabling a second voltage, which is a voltage between the first electric double-layer capacitor and the second electric double-layer capacitor, to be half of a power supply voltage supplied through the power line and the common line.

**14.** The balancer for electric double-layer capacitors as claimed in any of claims 1 to 12, wherein, when a capacitance of the second electric double-layer capacitor is smaller than a capacitance of the first electric double-layer capacitor,
the first electric double-layer capacitor is charged and the second electric double-layer capacitor is discharged by an amount corresponding to a difference between a first transistor current, which is a collector current of the first transistor, and a second transistor current, which is a collector current of the second transistor, thereby enabling a second voltage, which is a voltage between the first electric double-layer capacitor and the second electric double-layer capacitor, to be half of a power supply voltage supplied through the power line and the common line.

Fig. 1

Fig. 2

Fig. 3

# EP 4 757 116 A1

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 315 276 B1 (POWER INTEGRATIONS INC [US]) 21 May 2008 (2008-05-21) | 1-5,8-14 | INV. H02J7/54 |
| Y | * paragraph [0016] - paragraph [0020]; figure 2 * | 6,7 | H02J7/34 H02J7/96 |
| Y | US 2 956 172 A (TORKILDSEN ROBERT A) 11 October 1960 (1960-10-11) * column 1, line 64 - column 3, line 10; figures 1,2 * | 6,7 | |
| A | AT 412 684 B (ERTL HANS DR [AT]) 25 May 2005 (2005-05-25) * page 3, line 40 - page 4, line 7; figure 1b * | 1-14 | |
| A | US 2004/263121 A1 (THRAP GUY C [US]) 30 December 2004 (2004-12-30) * paragraph [0035] - paragraph [0041]; figure 2 * | 1-14 | |
| | | | TECHNICAL FIELDS SEARCHED (IPC) |
| | | | H02J G05F H01G |

The present search report has been drawn up for all claims

| Place of search | Date of completion of the search | Examiner |
|---|---|---|
| Munich | 13 April 2026 | Braccini, Roberto |

EPO FORM 1503 03.82 (P04C01)

## ANNEX TO THE EUROPEAN SEARCH REPORT
## ON EUROPEAN PATENT APPLICATION NO.

EP 25 22 0751

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | | Publication date | Patent family member(s) | | Publication date |
|---|---|---|---|---|---|
| EP 1315276 | B1 | 21-05-2008 | EP | 1315276 A2 | 28-05-2003 |
| | | | JP | 3893103 B2 | 14-03-2007 |
| | | | JP | 2003219555 A | 31-07-2003 |
| | | | US | 2003099123 A1 | 29-05-2003 |
| | | | US | 2004179324 A1 | 16-09-2004 |
| | | | US | 2006067096 A1 | 30-03-2006 |
| | | | US | 2007035977 A1 | 15-02-2007 |
| US 2956172 | A | 11-10-1960 | NONE | | |
| AT 412684 | B | 25-05-2005 | NONE | | |
| US 2004263121 | A1 | 30-12-2004 | EP | 1618625 A2 | 25-01-2006 |
| | | | JP | 2006524980 A | 02-11-2006 |
| | | | US | 2004263121 A1 | 30-12-2004 |
| | | | WO | 2004097868 A2 | 11-11-2004 |

EPO FORM P0459

For more details about this annex : see Official Journal of the European Patent Office, No. 12/82